# EUROPÄISCHE PATENTANMELDUNG

(11) **EP 2 067 914 A2**
(43) Veröffentlichungstag der Anmeldung: **10.06.2009**
(21) Anmeldenummer: 08000102.7
(22) Anmeldetag: 04.01.2008
(51) Int. Cl.: E04H 12/10, F03D 11/04, E02B 17/00, E04B 1/58

(54) **Gitterstruktur für Offshore-Bauwerke, insbesondere für Offshore-Windenergieanlagen, und Verfahren zur Herstellung derselben**

(30) Priorität: 04.12.2007 EP 07023454
(71) Anmelder: WeserWind GmbH, 27572 Bremerhaven (DE)
(72) Erfinder: Kassen, Dirk Dipl.-Ing., 49124 Georgsmarienhütte (DE)
(74) Vertreter: Möller, Friedrich

(57) **Zusammenfassung**

Die Erfindung betrifft eine als Gründungsstruktur dienende Gitterstruktur für Offshore-Bauwerke. Die Gitterstruktur wird dazu am Meeresboden verankert und trägt in ihrem oberen Bereich beispielsweise eine Offshore-Windenergieanlage.

Die bisher bekannten Gitterstrukturen weisen den Nachteil auf, dass die miteinander verbundenen Rohre (17, 18) an Knotenpunkten (14, 15, 16) entlang komplizierter Fügeflächen (24, 25) miteinander verschweißt werden, wobei die Schweißnähte aufgrund der Dreidimensionalität der Fügeflächen (24, 25) nicht automatisch hergestellt werden können.

Die Erfindung beseitigt diesen Nachteil dadurch, dass für die Knotenpunkte (14, 15, 16) gegossene Knotenteile (19, 20, 21) zum Verschweißen mit Säulen (12) und Streben (13) der die Gitterstruktur bildenden Rohre (17, 18) verwendet werden. Dadurch sind ebene, umlaufende Schweißnähte möglich, die maschinell hergestellt werden können.

## Beschreibung

Die Erfindung betrifft ein Verfahren zur Herstellung einer Gitterstruktur für Offshore-Bauwerke, insbesondere für Offshore-Windenergieanlagen, gemäß dem Oberbegriff des Anspruchs 1. Außerdem betrifft die Erfindung eine Gitterstruktur für Offshore-Bauwerke, insbesondere für Offshore-Windenergieanlagen, gemäß dem Oberbegriff des Anspruchs 4.

Gitterstrukturen der hier angesprochenen Art werden für Offshore-Bauwerke verwendet. Bevorzugt dienen solche Gitterstrukturen als Gründungsstrukturen für Offshore-Bauwerke. Diese Gründungsstrukturen befinden sich mindestens größtenteils unter Wasser und stellen quasi das Fundament der Offshore-Bauwerke, insbesondere Offshore-Windenergieanlagen, dar.

Die Gitterstrukturen sind als dreidimensionale Rahmentragwerke ausgebildet mit aufrechten bzw. leicht geneigten Säulen in den Kanten- bzw. Eckbereichen und vorzugsweise diagonalgerichteten Streben. Die Säulen und Streben werden üblicherweise aus Rohren gebildet, können aber auch aus Stangen bestehen. Die Rohren oder Stangen der Säulen und Streben sind an Knotenpunkten miteinander verbunden, vorzugsweise verschweißt.

Zur Herstellung solcher Gitterstrukturen werden senkrecht und diagonal verlaufende Rohre und/oder Stangen zu einem dreidimensionalen Rahmentragwerk zusammengesetzt. Um die Rohre oder gegebenenfalls auch Stangen im Bereich der Knotenpunkte miteinander verschweißen zu können, müssen die Rohrenden dreidimensional ausgeformte Fügeflächen erhalten, damit sie an ein anderes Rohr passend angesetzt werden können. Die zum Verschweißen notwendigen Schweißnähte erhalten einen dementsprechend dreidimensionalen Verlauf. Abgesehen davon, dass die Fügeflächen kompliziert herzustellen sind, können die Schweißnähte aufgrund des dreidimensionalen Verlaufs der Fügeflächen nicht maschinell, sondern nur manuell hergestellt werden.

Es ist Aufgabe der Erfindung, ein Verfahren zur Herstellung einer Gitterstruktur für Offshore-Bauwerke und eine Gitterstruktur zu vereinfachen, insbesondere um maschinelle Schweißverfahren möglich zu machen.

Ein Verfahren zur Lösung dieser Aufgabe weist die Maßnahmen des Anspruchs 1 auf. Dementsprechend werden die Rohre und/oder Stangen der Gitterstruktur an den Knotenpunkten mit Hilfe von Knotenteilen verbunden. Die Knotenteile sorgen für geometrisch einfache Fügeflächen, die ein maschinelles Verschweißen der Stangen bzw. Rohre mit den Knotenteilen zulassen.

Im Folgenden wird zur Vereinfachung lediglich von Rohren gesprochen, obwohl die Erfindung hierauf nicht beschränkt sein soll.

Bevorzugt werden die in einer Ebene geschnittenen Stirnseiten der Rohre mit ebenfalls flächigen Fügeflächen der Knotenteile zur Herstellung der Verbindungen zusammengesetzt und miteinander verschweißt. Zum Schweißen eignen sich alle gängigen Schweißverfahren. Aufgrund der ebenflächigen Stirnseiten der Rohre und der ebenso ebenflächigen Fügeflächen der Knotenteile ist eine Verbindung der Rohre und Knotenteile mit ringförmigen Schweißnähten möglich. Solche ringförmigen Schweißnähte können in wirtschaftlicher Weise maschinell hergestellt werden. An jeder Nahtstelle zwischen einer Fügefläche eines Knotenteils und einer Stirnseite eines Rohrs sind bevorzugt mehrere umlaufende Schweißnähte vorgesehen, die sich überlappen und/oder überdecken.

Die in zweidimensionalen Ebenen liegenden Stirnseiten der Rohre und Fügeflächen der Knotenteile verlaufen gemäß einer bevorzugten Ausgestaltung der Erfindung senkrecht zu den Längsachsen der Rohre und senkrecht zur Hauptlängsachse der Knotenteile und zu den von der Hauptlängsachse schräg abzweigenden Nebenlängsachsen der Knotenteile.

Dadurch sind die Knotenteile und die Rohre bei runden Fügeflächen und Stirnseiten mit kreisförmigen Schweißnähten verbindbar, die sich besonders einfach maschinell bilden lassen.

Eine Gitterstruktur zur Lösung der eingangs genannten Aufgabe weist die Merkmale des Anspruchs 4 auf. Demnach wird die Gitterstruktur aus Rohren (gegebenenfalls auch Stangen) und an den Knotenpunkten vorgesehene Knotenteile zusammengesetzt. Durch die Verwendung von Knotenteilen wird die Herstellung der Gitterstruktur deutlich vereinfacht, weil die Enden der Rohre nicht mehr an die Wölbung anderer Rohre dreidimensional angepasst werden müssen. Die Knotenteile ermöglichen ebenflächige, vorzugsweise kreisrunde, Fügeflächen, so dass auch die Rohrenden über ebenflächigen Stirnseiten verfügen können. An den ebenflächigen Fügeflächen der Knotenteile sind die ebenen Stirnseiten der Rohre, die nur noch gerade abgeschnitten werden müssen, mit geometrisch einfachen, vorzugsweise zweidimensionalen, Schweißnähten automatisch anschweißbar.

Gemäß der Erfindung weisen die Knotenteile mehrere vorzugsweise ebene Fügeflächen auf, so dass mehrere Rohre gleichzeitig mit einem Knotenteil verbunden werden können. Jede Fügefläche ist so ausgerichtet, dass sie die Längsmittelachse desjenigen Rohrs, womit sie verbunden werden soll, rechtwinklig schneidet. Die damit zu verbindenden Stirnseiten der Rohre werden dadurch einfach durch senkrechtes Abtrennen der Rohre erhalten; und zwar unabhängig davon, wie die Rohre innerhalb der Gitterstruktur verlaufen. Die Gitterstruktur lässt sich so einfach aus Standardteilen bilden.

Die zur Herstellung der Gitterstruktur verwendeten Rohre weisen vorzugsweise einen runden oder ovalen Querschnitt auf. Die Knotenteile weisen zumindest in den Bereichen der Fügeflächen im Wesentlichen die gleiche Querschnittsgestalt wie die zugeordneten Rohre auf. Somit wird ein passgenaues Aneinandersetzen der Rohre an die Knotenteile ermöglicht.

Die Knotenteile sind gemäß einer bevorzugten Ausgestaltung der Erfindung gegossen, und zwar insbesondere aus Stahlguss oder einem anderen schweißbaren Metall. Solche Knotenteile stellen dann sozusagen Gussnoten dar, die als Standardteile gegossen und bevorratet werden können. Dadurch, dass die Knotenteile gegossen sind, lassen sie nahezu beliebige Formgebungen zu. Die Verwendung eines schweißbaren Metalls ermöglicht es, die gegossenen Knotenteile durch Schweißen mit den Rohren zu verbinden. Im Regelfall befindet sich ein großer Teil der Gitterstruktur im Bereich unterhalb der Wasseroberfläche, also im getauchten Zustand, sodass vorzugsweise korrosionsbeständige Materialien, wie rostfreie Stähle, für die Knotenteile und die Rohre verwendet werden.

Die Knotenteile sind gemäß einer bevorzugten Ausgestaltung der Erfindung innen hohl. Vorzugsweise verfügen die Knotenteile über einen einzigen durchgehenden Hohlraum. Dadurch sind auch die Knotenteile rohrartig ausgebildet. Die Fügeflächen der hohlen Knotenteile werden dann durch ebene Kreisringflächen gebildet. Die Außendurchmesser der Fügeflächen der Knotenteile entsprechen bevorzugt den Außendurchmessern der Rohre, womit die Fügeflächen verbunden werden sollen, so dass nach dem Anschweißen der Rohre an die Fügeflächen des jeweiligen Knotenteils bündige Übergänge entstehen. Bevorzugt ist auch die Wandstärke der Knotenteile zumindest im Bereich der Fügeflächen etwa gleich der Wandstärke der Rohre, die mit der jeweiligen Fügefläche verschweißt werden sollen. Es ist auch denkbar, dass die Knotenteile im Bereich der ringförmigen Fügeflächen über eine etwas größere Wandstärke verfügen. Dann ist der Innendurchmesser der Fügeflächen kleiner als der Innendurchmesser der Rohre. Denkbar ist es aber auch, dass die Fügeflächen der Knotenteile einen größeren Außendurchmesser als die damit zu verbindenden Rohre aufweisen. Dann sind die Innendurchmesser der Fügeflächen und der Rohre vorzugsweise gleich.

Gemäß einer besonderen Ausgestaltung der Erfindung ist vorgesehen, die Fügeflächen der Knotenteile und die Stirnflächen der Rohre anzufasen. Die Anfasung ist so gerichtet, dass ein nach außen divergierender V-förmiger Spalt entsteht, in dem die umlaufenden Schweißnähte angeordnet werden. Es sind auch weitere Ausgestaltungen der Fügeflächen und/oder der Stirnseiten der Rohre denkbar, die zu einer den Anforderungen entsprechenden Schweißnahtausbildung zwischen den Rohren und den Knotenteilen führen.

Eine weitere bevorzugte Ausgestaltung sieht es vor, dass mindestens einige Fügeflächen der Knotenteile umlaufend schräg sind, wodurch sie eine kegelstumpfförmige bzw. tellerfederartige Fläche erhalten. Dagegen können die Stirnflächen der Rohre gerade abgeschnitten sein. Die tellerfederartige Gestalt der Fügeflächen der Knotenteile lässt sich leicht beim Gießen derselben herstellen. Die tellerfederartige Gestalt der Fügeflächen führt zu einer Schweißbadsicherung, indem die Fügeflächen der Knotenteile an den inneren Kanten der Stirnflächen der Rohre anliegen. Hierbei werden die Rohre zu den Fügeflächen der Knotenteile zentriert und es erfolgt eine ringförmige Linienabdichtung zwischen den Fügeflächen und den Stirnflächen trotz eines nach außen divergierenden Schweißspalts. Besonders wirksam ist die geschilderte Schweißbadsicherung, wenn der Innendurchmesser der Fügeflächen etwas kleiner ist als der Innendurchmesser der Stirnflächen der Rohre. Die Innenkanten der Fügeflächen liegen dann im inneren Holraum der Rohre.

Aufgrund der zuvor erläuterten Ausgestaltung der erfindungsgemäßen Gitterstruktur, insbesondere der Verwendung von Knotenteilen, insbesondere Gussknoten, können die Rohre mit den Knotenteilen durch umlaufende kreis- bzw. ringförmige Schweißnähte verbunden werden. Dadurch wird erreicht, dass die Schweißnähte maschinell herstellbar sind, weil sie in einer Ebene liegen. Vorzugsweise verlaufen die Ebenen, in denen die Schweißnähte jeweils verlaufen, senkrecht zu den Längsmittelachsen der Rohre.

Die Gitterstruktur weist mehrere Säulen und Streben auf, die mit den erfindungsgemäßen Knotenteilen durch Schweißen verbunden sind. Die vorzugsweise identisch ausgebildeten Säulen sind aus mehreren Rohren mit dazwischen angeordneten Knotenteilen gebildet. Die Streben versteifen die Zwischenräume zwischen benachbarten Säulen, und zwar vorzugsweise als Diagonalstreben oder als Kreuzstreben. Die Streben sind durch Rohre gebildet, die an den Knotenteilen zwischen den Rohren der Säulen festgeschweißt sind. Bei Kreuzstreben können an den Kreuzungsstellen der Streben auch Knotenteile vorgesehen sein, so dass die Streben durch Rohre und Knotenteile gebildet werden.

Die Streben und die Säulen weisen unterschiedliche Richtungen auf. Dementsprechend sind die Knotenteile mit einer entsprechenden Anzahl von Fügestellen versehen, die senkrecht zu den quer die Längsachsen der Rohre schneidenden Stirnseiten der Rohre verlaufen, wodurch mit ebenen kreisringförmigen Schweißnähten die Rohre der Säulen und der Streben mit den Knotenteilen, die vorzugsweise als Gussknoten ausgebildet sind, automatisch verschweißbar sind.

Im Folgenden wird ein bevorzugtes Ausführungsbeispiel der Erfindung anhand der Zeichnung näher erläutert. In der Zeichnung zeigen:

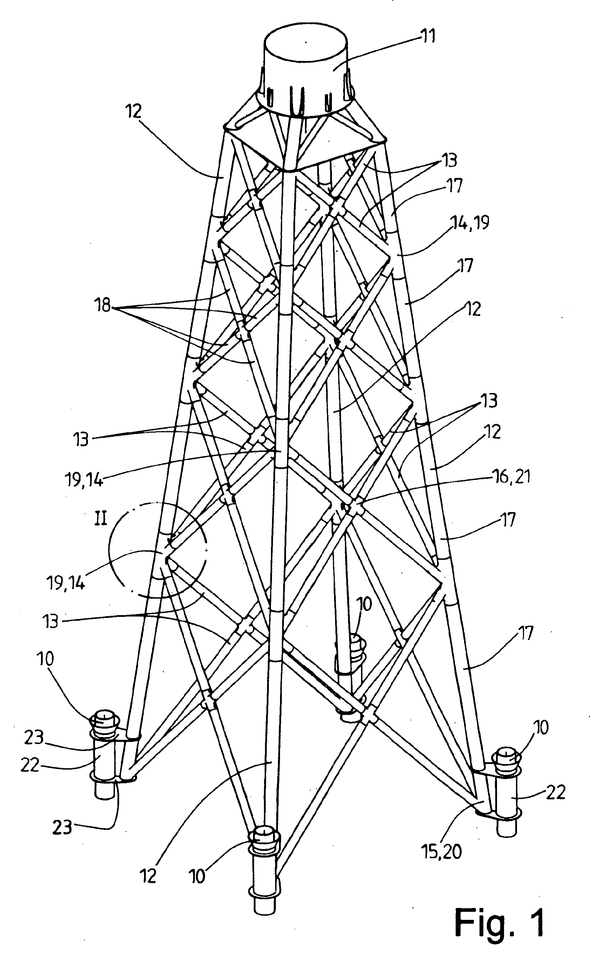

- Fig. 1: eine Gitterstruktur in einer perspektivischen Darstellung,

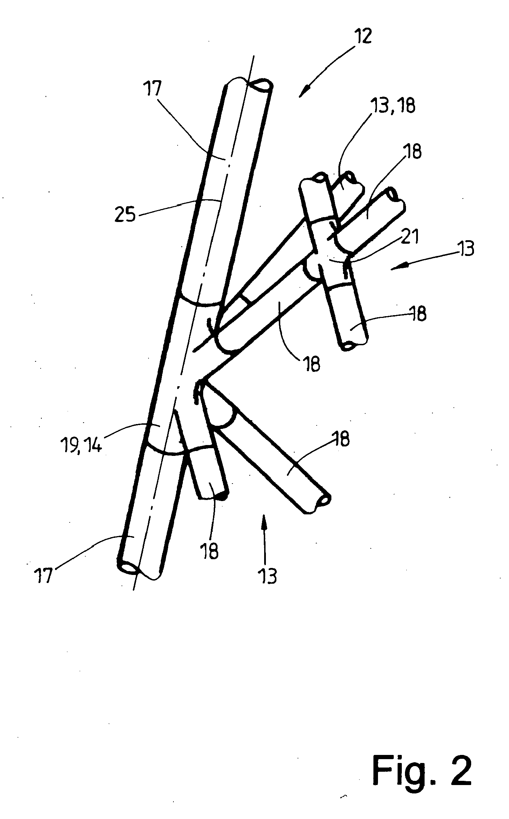

- Fig. 2: eine Einzelheit II der Gitterstruktur der Fig. 1 in größerem Maßstab,

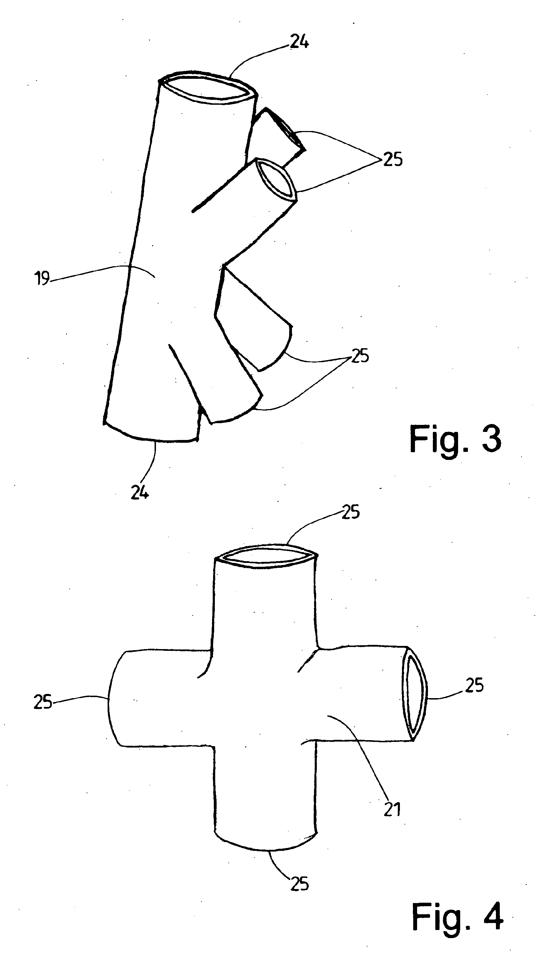

- Fig. 3: das Knotenteil der Fig. 2,
- Fig. 4: ein Knotenteil zum Verbinden von vier Diagonalstreben,

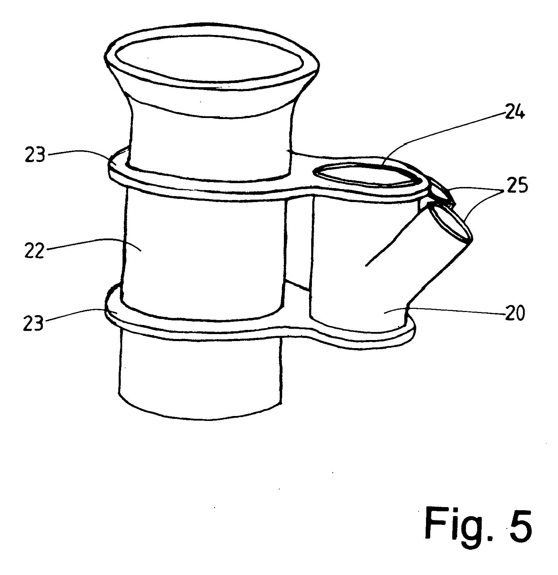

- Fig. 5: ein als Fußknoten ausgebildeter Knotenteil, und
- Fig. 6: einen vergrößerten Längsschnitt durch ein Ende eines Knotenteils mit einem angesetzten Rohr vor dem Verschweißen.

Die in den Figuren gezeigte Gitterstruktur ist beispielsweise vorgesehen als Gründungsstruktur einer Offshore-Windenergieanlage. Die als Fundament für die Offshore-Windenergieanlage dienende Gitterstruktur wird auf den Meeresboden aufgesetzt und dort mit Pfahlhüsen 22 an Gründungspfählen 10 verankert. Die Gitterstruktur ist größtenteils im Wasser angeordnet. Sie ragt nur mit einem oberen Ende, nämlich mit einem Übergangsstück 11, aus dem Wasser heraus. Mit dem Übergangsstück 11 wird der Fuß eines Turms einer Windenergieanlage verbunden.

Die hier gezeigte Gitterstruktur ist als dreidimensionales Rahmentragwerk ausgebildet. Dazu verfügt die Gitterstruktur über hochragende Säulen 12 und überwiegend diagonalgerichtete Streben 13. Die Streben 13 sind mit den Säulen 12 an Knotenpunkten 14 bzw. 15 verbunden. Die in den Figuren gezeigte Gitterstruktur verfügt über vier Säulen 12 an den vier Ecken bzw. aufragenden Kanten der dreidimensionalen Gitterstruktur. Bei der gezeigten Gitterstruktur sind die Säulen 12 leicht gegenüber der Vertikalen geneigt, laufen nämlich in Richtung zum Übergangsstück 11 am oberen Ende der Gitterstruktur etwas konvergierend, so dass sich der Abstand der Säulen 12 ausgehend von den Knotenpunkten 15 an den unteren Enden der Säulen 12 zum oberen Übergangsstück 11 hin kontinuierlich verringert. Die Säulen 12 laufen aber am oberen Ende der Gitterstruktur nicht zusammen, so dass sie unterhalb des Übergangsstücks 11 auch noch beabstandet sind. In jeder von zwei benachbarten Säulen 12 aufgespannten trapezförmigen Ebene sind die Streben 13 angeordnet. Im gezeigten Ausführungsbeispiel verlaufen die Streben 13 diagonal zwischen zwei übereinanderliegenden Knotenpunkten 14, 15 einerseits und zwei benachbarten Säulen 12 andererseits. Dadurch kreuzen sich die diagonalen Streben 13 in Knotenpunkten 16. Bei der hier gezeigten Gitterstruktur sind vier Etagen sich kreuzender Streben 13 und Knotenpunkte 14 übereinander angeordnet.

Die Erfindung ist nicht auf Gitterstrukturen mit vier Säulen 12 beschränkt. Die Erfindung eignet sich auch für Gitterstrukturen mit nur drei Säulen 12 oder mehr als vier Säulen 12. Ebenso können die Säulen 12 senkrecht verlaufen oder unterschiedlich geneigt sein. Schließlich können die Streben 13 in weniger oder mehr als vier übereinanderliegenden Etagen angeordnet sein und auch andere Verläufe aufweisen. Beispielsweise müssen sich nicht zwei Streben 13 an einem Knotenpunkt 16 kreuzen.

Die Säulen 12 und Streben 13 sind aus Rohren 17, 18 entsprechender Längen gebildet. Gegebenenfalls können die Säulen 12 und/oder Streben 13 auch aus massiven Stangen mit beliebigen Querschnitten gebildet sein. Die Rohre 17 der Säulen 12 weisen einen größeren Durchmesser auf als die Rohre 18 der Streben 13. Im Querschnitt sind die Rohre 17 der Säulen 12 und die Rohre 18 der Streben 13 rund ausgebildet. Die Säulen 12 und/oder Streben 13 können aber auch über andere Querschnitte, beispielsweise elliptische oder ovale Querschnitte, verfügen.

Die Enden der Streben 13 sind nicht unmittelbar mit den Säulen 12 verschweißt, sondern durch im Bereich der Knotenpunkte 14, 15 und vorzugsweise auch 16 vorgesehene Knotenteile 19, 20 und 21 verbunden. Abweichend vom gezeigten Ausführungsbeispiel können die Streben 13 an ihren Kreuzungsstellen, nämlich den Knotenpunkten 16, direkt miteinander verschweißt sein, insbesondere wenn die Streben 13 sich rechtwinklig kreuzen.

Die Knotenteile 20 an den unteren Enden der Säulen 12 dienen zur Verbindung der Gitterstruktur mit den Gründungspfählen 10. Zu diesem Zweck sind mit den unteren Knotenteilen 20 der Säulen 12 senkrechte Pfahlhülsen 22 verbunden. Durch die Pfahlhülsen 22 erstrecken sich die Gründungspfähle 10 zur Verankerung der Gitterstruktur auf dem Meeresboden. Die Pfahlhülsen 22 sind durch zwei voneinander beabstandete, vorzugsweise horizontale Platten 23 mit dem jeweiligen unteren Knotenteil 20 verbunden. Im gezeigten Ausführungsbeispiel sind die Platten 23 dem oberen und unteren Ende des jeweiligen Knotenteils 20 zugeordnet. Dazu sind die Platten 23 brillenartig ausgebildet, indem sie die Ränder der Knotenpunkte 15 und die Pfahlhülsen 22 umgeben. Die Platten 23 sind mit den Knotenteilen 20 und mit den Pfahlhülsen 22 verschweißt.

Die Knotenteile 19, 20 und 21 sind verästelt, indem sie mehrere Fügeflächen 24, 25 aufweisen, die zur Verbindung mit jeweils einem Rohr 17 bzw. 18 dienen. Das Knotenteil 19 verfügt über gegenüberliegende parallele Fügeflächen 24 an gegenüberliegenden Enden, womit korrespondierende Stirnseiten 26 der Rohre 17 zur Bildung der Säulen 12 verschweißt werden. Des Weiteren verfügt das Knotenteil 19 über vier Fügeflächen 25 für an das Knotenteil 19 anzuschweißende Stirnflächen 27 der dünneren Rohre 18 zur Bildung der Streben 13. Die Fügeflächen 25 verlaufen unter unterschiedlichen Winkeln zueinander und zu den Fügeflächen 24 für die Rohre 17 der Säulen 12.

Die Fügeflächen 24 und 25 aller Knotenteile 19 und auch der Knotenteile 20 und 21 verlaufen senkrecht zur Längsmittelachse der Rohre 17 und 18 zur Bildung der Säulen 12 und der Streben 13. Ebenso verlaufen die Stirnflächen 26 und 27 senkrecht zu den Längsachsen der Rohre 17 und 18. Dadurch können die Rohre 17 und 18 mit den Knotenteilen 19 und auch den Knotenteilen 20 und 21 durch senkrecht zu den Längsmittelachsen der Rohre 17 und 18 verlaufende kreisförmige Schweißnähte miteinander verbunden werden.

Die Knotenteile 19, 20 und 21 sind ebenso wie die Rohre 17 und 18 hohl ausgebildet. Die Fügeflächen 24 und 25 der Knotenteile 19, 20 und 21 sind dadurch kreisringartig. Die Außendurchmesser der Fügeflächen 24 bzw. 25 und der Stirnflächen 26 bzw. 27 der Rohre 17 bzw. 18 sind bevorzugt gleich. Auch die Wandstärken der Knotenteile 19, 20 und 21 insbesondere in den Bereichen der Fügeflächen 24 bzw. 25 sind bevorzugt etwa gleich. Die Fügeflächen 24 und 25 und die Stirnflächen 26 und 27 sind als ebene Ringflächen ausgebildet, die senkrecht zu den Längsachsen der Rohre 17 und 18 verlaufen. Es ist jedoch denkbar, die Kanten der Fügeflächen 24 und 25 und der Stirnflächen 26 und 27 mindestens einseitig anzufasen oder anzuschrägen, je nachdem welche Schweißnaht zur Verbindung der Rohre 17 und 18 mit den Knotenteilen 19, 20 und 21 gewünscht ist.

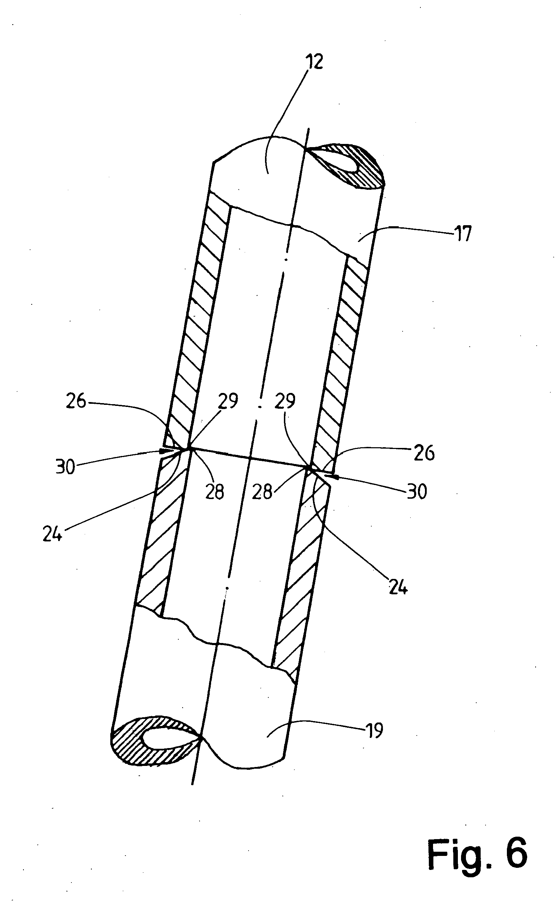

In der Fig. 6 sind ein Endbereich des Knotenteils 19 mit der Fügefläche 24 und ein Endbereich eines Rohrs 17 für eine Säule 12 dargestellt. In diesem Fall ist der Innendurchmesser des Knotenteils 19 im Bereich der Fügefläche 24 etwas kleiner als der Innendurchmesser des Rohrs 17, während die Außendurchmesser gleich sind. Im Bereich der Fügefläche 24 verfügt das Knotenteil 19 dadurch über eine etwas größere Wandstärke. Während das Ende des Rohrs 17 rechtwinklig abgeschnitten ist zur Bildung einer ebenen, ringförmigen Stirnfläche, ist die Fügefläche 24 zwischen dem Außendurchmesser und dem Innendurchmesser leicht angeschrägt, steigt nämlich in Richtung zur Stirnfläche 26 des Rohrs 17 an. Diese Anschrägung ist umlaufend auf der ringförmigen Fügefläche 24, so dass die Fügefläche 24 eine schirmartige bzw. tellerfederartige Gestalt aufweist. Dadurch ist zum einen eine leichte Zentrierung der Fügefläche 24 gegenüber der Stirnfläche 26 möglich und zum anderen liegt eine Innenkante 29 der Stirnfläche 26 des Rohrs 17 an der schräg umlaufenden Fügefläche 24 des Knotenteils 19 an zur innenseitigen Abdichtung eines sich nach außen erweiternden Schweißspalts 30. Durch diese Abdichtung der Fügeflächen 24 gegenüber der Stirnfläche 26 an der Innenkante 29 des Rohrs 17 entsteht eine sogenannte Schweißbadsicherung 28, die ein Hineinlaufen des flüssigen Schweißmaterials in das Rohr 17 und das Knotenteil 19 verhindert. Wie in vorstehender Weise beschrieben, können auch die Fügeflächen 25 für die Stirnflächen 27 der Rohre 18 und die Fügeflächen der anderen Knotenteile 20 und 21 ausgebildet sein. Denkbar ist es auch, die Stirnflächen 26 und 27 der Rohre 17 und 18 umlaufend schräg, nämlich tellerfederartig, auszubilden, so dass ein breiterer Schweißspalt zwischen der jeweiligen Stirnfläche 26 bzw. 27 und der damit jeweils korrespondierenden Fügefläche 24 und 25 entsteht.

Die Knotenteile 19, 20 und 21 sind aus einem schweißbaren metallischen Werkstoff einstückig gegossen. Beispielsweise bestehen die Knotenteile 19, 20 und 21 aus Stahlguss. Dadurch bilden die Knotenteile 19, 20 und 21 sozusagen Gussknoten für die Knotenpunkte 14, 15 und 16. Durch das Gießen der Knotenteile 19, 20 und 21 können die in der Fig. 6 gezeigten kegelstumpfförmigen bzw. tellerfederartigen Fügeflächen 24 und 25 an die Enden der Knotenteile 19, 20 und 21 einfach angegossen werden. Hingegen können die ebenen Stirnflächen 26 und 27 an den Rohren 17 und 18 einfach durch Abtrennen der Rohre 17 und 18 von einem längeren Rohr hergestellt werden, wobei der Trennschnitt senkrecht zur Längsachse des Rohrs 17 und 18 verläuft.

### Bezugszeichenliste:

- 10: Gründungspfahl
- 11: Übergangsstück
- 12: Säule
- 13: Strebe
- 14: Knotenpunkt
- 15: Knotenpunkt
- 16: Knotenpunkt
- 17: Rohr
- 18: Rohr
- 19: Knotenteil
- 20: Knotenteil
- 21: Knotenteil
- 22: Pfahlhülse
- 23: Platte
- 24: Fügefläche
- 25: Fügefläche
- 26: Stirnfläche
- 27: Stirnfläche
- 28: Schweißbadsicherung
- 29: Innenkante
- 30: Schweißspalt

## Patentansprüche

1. Verfahren zur Herstellung einer Gitterstruktur für Offshore-Bauwerke, insbesondere für Offshore-Windenergieanlagen, mit in Knotenpunkten (14, 15, 16) zusammenlaufenden und miteinander verbundenen Stangen und/oder Rohren (17, 18), **dadurch gekennzeichnet, dass** die Stangen und/oder die Rohre (17, 18) an den Knotenpunkten (14,15,16) mittels Knotenteilen (19, 20, 21) verbunden werden.

2. Verfahren nach Anspruch 1 **dadurch gekennzeichnet, dass** Stirnflächen (26, 27) der Stangen und/oder Rohre (17, 18) und Fügeflächen (24, 25) der Knotenteile (19, 20, 21) zusammengesetzt und durch Schweißen, vorzugsweise mit ringförmigen Schweißnähten, dauerhaft verbunden werden.

3. Verfahren nach Anspruch 1 oder 2 **dadurch gekennzeichnet dass** die Schweißnähte in Ebenen verlaufen, die insbesondere senkrecht zu der Richtung der Stangen und/oder Rohre (17,18) bzw. zu den Längsmittelachsen der Stangen und/oder Rohre (17, 18), angeordnet sind.

4. Gitterstruktur für Offshore-Bauwerke, insbesondere für Offshore-Windenergieanlagen, mit axial und winklig zueinander verlaufenden Stangen und/oder Rohren (17, 18), die in Knotenpunkten (14, 15, 16) miteinander verbunden sind, **dadurch gekennzeichnet, dass** an den Knotenpunkten (14, 15, 16) Knotenteile (19, 20, 21) zur Verbindung der Stangen und/oder Rohre (17,18) vorgesehen sind.

5. Gitterstruktur nach Anspruch 4, **dadurch gekennzeichnet, dass** die Knotenteile (19, 20, 21) mehrere Fügeflächen (24, 25) aufweisen, wobei vorzugsweise die Fügeflächen (24, 25) parallel und/oder winklig zueinander angeordnet sind, insbesondere für jede mittels eines Knotenteils (19, 20, 21) zu verbindende Stange und/oder für jedes mittels eines Knotenteils (19, 20, 21) zu verbindende Rohr eine Fügefläche (24, 25) an dem Knotenteil (19, 20, 21) vorgesehen ist.

6. Gitterstruktur nach Anspruch 4 oder 5, **dadurch gekennzeichnet, dass** jede Fügefläche (24, 25) eines Knotenteils (19, 20, 21) mit einer Stirnfläche (26, 27) jeder mit dem Knotenteil (19, 20, 21) zu verbindenden Stange und/oder jedem mit dem Knotenteil (19, 20, 21) zu verbindendem Rohr (17, 18) korrespondiert, und die Fügeflächen (24, 25) und Stirnflächen (26, 27) vorzugsweise senkrecht zu den Richtungen bzw. den Längsmittelachsen der Stangen und/oder Rohre (17, 18) verlaufen.

7. Gitterstruktur nach einem der Ansprüche 4 bis 6, **dadurch gekennzeichnet, dass** miteinander korrespondierende Fügeflächen (24, 25) an den Knotenteilen (19, 20, 21) und an den Stirnflächen (26, 27) der Stangen und/oder Rohre (17, 18) durch Verschweißen miteinander verbunden sind.

8. Gitterstruktur einem der Ansprüche 4 bis 7, **dadurch gekennzeichnet, dass** die Rohre (17, 18) hohl ausgebildet sind, und vorzugsweise einen runden oder ovalen Querschnitt aufweisen.

9. Gitterstruktur einem der Ansprüche 4 bis 8, **dadurch gekennzeichnet, dass** die Knotenteile (19, 20, 21) im Bereich der Fügeflächen (24, 25) im Wesentlichen die gleiche Querschnittsgestalt wie die zugeordneten Rohre (17,18) aufweisen.

10. Gitterstruktur einem der Ansprüche 4 bis 9, **dadurch gekennzeichnet, dass** die Knotenteile (19, 20, 21) aus einem schweißbaren Metall gegossen sind, insbesondere die Knotenteile (19, 20, 21) hohl ausgebildet sind, vorzugsweise durchgehend mit ringförmigen Fügeflächen (24, 25).

11. Gitterstruktur einem der Ansprüche 4 bis 10, **dadurch gekennzeichnet**, das die Knotenteile (19, 20, 21) mindestens die Wandstärke der Rohre (17, 18) aufweisen, vorzugsweise über eine geringfügig größere Wandstärke als die Rohre (17, 18) verfügen, wobei die Knotenteile (19, 20, 21) einen etwas kleineren Innendurchmesser die Rohre (17,18) aufweisen.

12. Gitterstruktur einem der Ansprüche 4 bis 11, **dadurch gekennzeichnet, dass** der innere Rand der Fügefläche (24, 25) des Knotenteils (19, 20, 21) am inneren Rand der Stirnfläche (26, 27) der Rohre (17, 18) als Schweißbadsicherung (28) anliegt, wobei vorzugsweise die Fügefläche (24, 25) des Knotenteils (19, 20, 21) in das Innere des Rohres (17,18) etwas hineinragt.

13. Gitterstruktur einem der Ansprüche 4 bis 12, **gekennzeichnet durch** mehrere Säulen (12) und vorzugsweise diagonal zu den Säulen (12) verlaufende Streben (13), wobei jede Säule (12) aus mehreren auf einer Längsmittelachse der Säule (12) liegenden Säulenabschnitten aus Rohren (17) gebildet ist, die Streben (13) jeweils aus mindestens einem Rohr (18) gebildet sind, und die Streben (13) sowie die Säulenabschnitte an ihren Knotenpunkten (14,15,16) **durch** Knotenteile (19, 20, 21) verbunden sind.
